# EUROPEAN PATENT SPECIFICATION

(11) **EP 0 477 173 B1**
(45) Date of publication and mention of the grant of the patent: **09.10.1996**
(21) Application number: 89912972.0
(22) Date of filing: 14.11.1989
(51) Int. Cl.: G06F 3/14, G06F 3/033

(54) **APPARATUS FOR DOCUMENT ANNOTATION AND MANIPULATION USING IMAGES FROM A WINDOW SOURCE**
VORRICHTUNG FÜR BELEGKOMMENTIERUNG UND MANIPULIERUNG UNTER VERWENDUNG VON BILDERN EINER FENSTERQUELLE
APPAREIL D'ANNOTATION ET DE MANIPULATION DE DOCUMENTS UTILISANT DES IMAGES PROVENANT D'UNE SOURCE D'AFFICHAGE DE FENETRES

(30) Priority: 02.06.1989 US 360656
(43) Date of publication of application: 01.04.1992
(73) Proprietor: WANG LABORATORIES, INC., Billerica, MA 01821-4130 (US)
(72) Inventor: LEVINE, Stephen, R., North Andover, MA 01845 (US); ABRAMS, Kenneth, H., Sudbury, MA 01776 (US); BURNS, Raymond, S., North Andover, MA 01845 (US); HARUI, Alex, J., Derry, NH 03038 (US); LAKNESS, David, R., Westford, MA 01886 (US); RUDIS, Ronald, F., North Andover, MA 01845 (US)
(74) Representative: Behrens, Dieter, Dr.-Ing.
(86) International application number: US8905114
(87) International publication number: WO9015380

(56) References cited:
- WO-A-90/05333
- JP-B-60 218 128
- US-A- 4 633 436
- IBM TECHNICAL DISCLOSURE BULLETIN, vol. 27, no. 10B, March 1985, New York, US, p. 5966 'Creating a footnote for a table or graphic object'
- PATENT ABSTRACTS OF JAPAN vol. 10, no. 80 (P-441)29 March 1986 & JP-A-60 218 128
- G. WILLIAMS, "The Apple Macintosh Computer: Mouse-window-desktop technology arrives for under $2500, BYTE Publications, publ. February 1984, see pp 30-54, particularly pp 33-37
- D. WESTON, "The Complete Book of Macintosh Assembly Language Programming", published 1987 by Scott, Foresman and Co., IL, pp 27-147, especially pp 49-73, 132 & 133
- IBM Technical Disclosure Bulletin, vol. 28, no. 4, Sept 1985, "Method For Creating Annotation Data", pp 1623-1628
- "Macintosh System Software: User's Guide, Version 6.0", published 1988 by Apple Computer, Inc., Cupertino, CA, pp 38-41,54,55,58-69

## Description

### Related applications:

This application is related to European patent application 89 913 139.5, claiming priority of 1. November 1988, published on 17. May 1990 as WO 90/05333, for an "Electronic Document Display with Annotation Routines and Multiple Windows" and assigned to the assignee of the present invention.

### Background of the Invention

In the business environment of today, many tasks are now automated by computers. For instance, a word processor enables the reorganizing and rewriting of documents without the retyping known in the past. In addition, various documents may be organized and stored by a computer filing system which allows retrieval by name, by chronolog ical or alphabetical order, or by other user-desired identification. Another example is a mail system on a network of computer terminals which allows messages to be sent to and from users of the network. Also, a phone system may be connected to a mail system which in turn enables phone messages to be stored and later forwarded to users. These and other computer devices enable various daily office tasks to be accomplished more quickly and more efficiently.

However, most computer devices require the user to be computer literate and to learn commands to direct the computer to perform a certain task. In more recent computer developments, menus (a series of commands from which to choose) are displayed to the user at appropriate decision junctures during the use of a computer device. The menus are considered to make the' computer device more "user friendly". Generally the choices on a menu are descriptive phrases written in terms which are more common to our everyday language rather than in a coded or technical computer language. Even so, the descriptive phrases may not initially have meaning, or at least the proper meaning, to a first-time user or a user who is not computer literate.

Thus, many office personnel do not make use of computer devices because of the time and complexity required to learn to operate these devices.

In a IBM TECHNICAL DISCLOSURE BULLETIN, vol. 27, no. 10B, March 1985, New York, U.S.A, pg. 5966, "Creating a Footnote for a Table or a Graphic Object" is an example of a system which uses a menu, also referred to as a displayed command bar, to allow a user to reference graphical data and data contained in a table with a footnote in a manner similar to creating a footnote for data contained as text.

BYTE Publications, Feb. 1984, pp. 30-54, G. Williams, "The Apple Macintosh Computer: Mouse-Window-Desktop Technology Arrives for Under $ 2500" and "Macintosh System Software: User's Guide, Version 6.0" 1988, Apple Computer, Inc., Cupertino, CA show a desktop-computer equipped with a mouse which is capable of displaying text or graphical images in one or more windows and which allows commands and data to be entered via a keyboard or mouse through the aid of menus.

PATENT ABSTRACTS OF JAPAN, JP 60 218 128 (Fujitsu K.K) Oct. 31, 1985, teaches a system which detects the coordinate position of a pen used to enter input via a tablet.

European application EP 89 913 139.5 published on 17. May 1990 as WO90/05333 teaches annotation of a screen image of a screen view which comprises one or more window images and a background image.

Accordingly, there is a need to make computer devices, and particularly those for office use, more initially "user friendly" or readily useable especially to first-time and computer illiterate users.

### Summary of the Invention

Related European patent application Serial No. 89 913 139.5 (WO 90/05333) claiming priority of 1. Novewmber 1988, for an "Electronic Document Display with Annotaion Routines and multiple Windows" and assigned to the assignee of the present invention discloses a computer device which is a degree friend-lier than the menu driven computer devices of the prior art. That computer device employs an electronic stylus and an electronic tablet which emulate a pencil and desk pad of paper used by the common business person. The electronic stylus and tablet are associated with the terminal of a digital processing system which has a monitor screen for displaying the strokes input by the electronic stylus and those input by a keyboard. An audio input/output assembly is alternatively connected to the terminal to provide voiced or other audio input to the digital processing system.

User interaction with the processing system in that device is through movement of the stylus with respect to the tablet. During use of the stylus two major views are viewed on the monitor screen, a desk view and an annotation session view. The desk view emulates a user's desk and pieces of paper which are stacked on and moved about his desk. In a preferred embodiment the desk view shows a stamp which is a reduced or miniaturized image of an actual page of each document presently on the user's system desk or computer work area. Each stamp serves as a unique direct pictorial representation of a certain document on the user's system desk as opposed to an indirect indication such as a prefabricated standard icon which is used for all documents of a certain type and which identifies a specific document only by a name or title associated with the icon.

The annotation session view provides a full screen size view of the document to be annotated or created by data input through the stylus, keyboard and/or audio input/output assembly. The document to be annotated may be chosen in three different manners. In one way, the document may be chosen from a program being currently run by the operating system. The user simply places one end of the stylus within a predetermined proximity of the surface of the tablet. When such proximity is sensed, the currently running program is temporarily stopped, preferably by a microprocessor interrupt, the view from the program being displayed at that time becomes the document to be annotated. In preparation for annotation if the screen is currently in a text mode, as opposed to a bit map mode, the data processing system changes the screen to a bit map or graphics mode. Text is converted to graphics by a character generation scheme. Also the dark background with light print of the text mode is reversed to a light background with dark print to more effectively simulate print on paper. Once prepared for annotation, the document may be annotated with visual annotations input through the stylus and/or keyboard and/or annotated with audio annotations input through the audio input/output assembly.

The present invention enables a document to be chosen from a program which supports the running of multiple windows. In particular, the multiple window support program manages a database of images and enables user querying of the database for desired images. The search results from a user query of the data base provides a display of an image in a dedicated image window on the monitor screen. Within that window the user is able to view, copy, print or send the image displayed therein. The program enables a prescribed number, for example 3, of image windows to be displayed on the monitor screen at one time. Typically, but not necessarily, the image windows overlap one another.

In accordance with the present invention, during the running of this program, the user may touch an end of the stylus on the tablet to capture individually each image window displayed at this time. Each captured item provides an independent document which is annotatable through the annotation system.

One embodiment of the present invention captures the full screen view of the overlapping windows and each image window and forms stamps to represent each captured item. The stamps are initially found in the In-box on the user's system desk which is displayed after the capturing process.

A menu of the annotation session enables the user to end the annotation session to obtain the desk view with a stamp of an overlapping window document in the In-box. Also in the desk view is an image capturing icon. Upon the user touching and lifting a stylus end on the tablet position corresponding to the image capturing icon, each image window from the overlapping window screen view is individually captured as a separate document. For each of these captured images/documents, a corresponding stamp is formed and appears in the desk view In-box.

Subsequent manipulation of the stamps and annotation of the corresponding documents is then performed as described in the related European patent application Serial No. 89 913 139.5 (WO 90/05 333). In addition, the processing system enables a user to store documents from the user's system desk into a desired database, for example the database of images managed by the multiple window support program. Subsequent retrieval of a desired document from a database is also enabled. This is accomplished through a file cabinet icon illustrated on the user's system desk. By the user selecting the icon with the stylus, a search routine is initiated. The search routine provides a search form in which the user specifies the desired document and particular database from which to retrieve the document. The user uses stylus and/or keyboard input to complete the search form. The search routine then performs a search with the criteria inserted on the search form. Thereafter, the search results are displayed for user selection.

Document storage is provided in a similar manner. Through operations of the stylus on a tablet, the user positions a stamp of a desired document so that it just touches or largely overlaps the file cabinet icon. Upon positioning of the stamp on the file cabinet icon, the processing system provides a store form on the user's system desk. The user completes the store form by inserting with the stylus and/or keyboard the name of the image to be stored, the desired database in which the image is to be stored, and other pertinent information. Upon completion of the store form, the user selects a menu selection to store the indicated image in the indicated database. The processing system responds to such actions of the user by storing the specified image in the specified database and resuming display of the user's system desk with the stamp of the desired document in its initial position before it was moved adjacent to the file cabinet icon.

### Brief Description of the Drawings

The foregoing and other objects, features and advantages of the invention will be apparent from the following more particular description of illustrative embodiments of the invention, as illustrated in the accompanying drawings in which like referenced characters refer to the same parts throughout the different views. The drawings are not necessarily to scale, emphasis instead being placed upon illustrating principles of the invention.

Figure 1 is a schematic view of a data processing system which embodies the present invention.

Figure 2 is an illustration of a view displayed during the running of a multiwindow support program.

Figure 3 is an illustration of the desk view employed in the data processing system of Figure 1 in which the windows of the program in Figure 2 have been individually captured as annotatable documents.

Figures 4a-4b illustrate a sequence of views displayed from invocation of a document filing operation from the desk view in the data processing system of Figure 1.

Figure 5a-5d illustrates a sequence of views displayed from invocation of a document retrieve operation from the desk view of the data processing system of Figure 1.

Figure 6 is a schematic view of a data structure employed in the data processing system of Figure 1 for holding parameter blocks of images from the multiwindow support program.

Figure 7 is a flow diagram of the interface between the multiwindow support program and programs supporting the data processing system of Figure 1.

Figure 8 is an illustration of the desk view employed in another embodiment of the invention.

### Detailed Description of the Preferred Embodiment

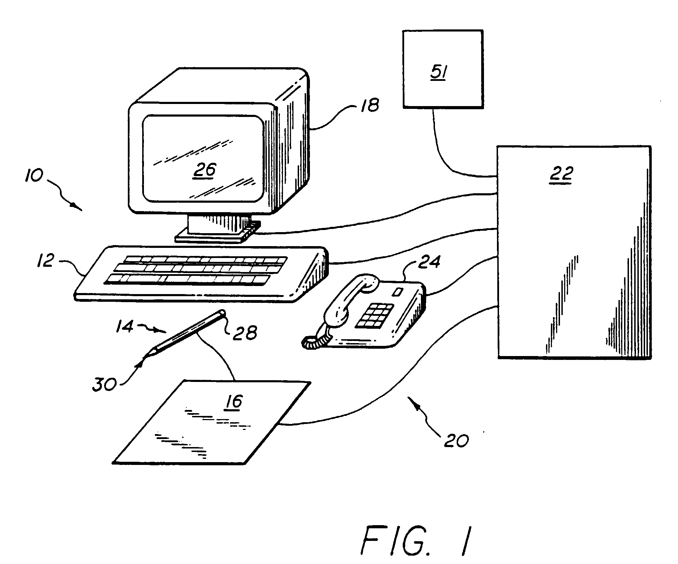

A data processing system which embodies the present invention is illustrated in Figure 1. The system 20 includes a computer terminal 10 with a keyboard 12 and a display unit 18, a two-ended electronic stylus 14 and an electronic tablet 16, all of which are connected to and driven by a digital processor 22. Digital processor 22 may be of the multitask type but a single task type is assumed in the description of the preferred embodiment. Preferably an audio assembly 24 having input and output ports such as a telephone set, is also connected to the terminal 10 for combining voice with visual annotations input through the stylus 14 and keyboard 12.

The stylus 14 is used on an upper planar surface of the tablet 16 to perform certain tasks such as writing a message and correcting a part thereof, creating a new document, or retrieving and annotating an existing document. The actions of the stylus 14 on the surface of the tablet 16 are displayed on the display unit 18 and the positions on the tablet have a one to one correspondence with the view 26 displayed on the display unit 18. Thus, as the user applies the stylus 14 to the tablet surface, an image representation of what the user is doing with the stylus is provided in the view 26 of display unit 18. The working elements of display unit 18, stylus 14 and tablet 16 are described in detail in the related European patent application Serial No. 89 913 139.5 (WO 90/05 333) and are only summarized hereafter as necessary.

The two-ended stylus 14 operates from either end, the writing tip end 30 or the eraser end 28. The writing tip end 30 and the eraser end 28 are alternatively driven by a tablet processor. When one end is moved into and sensed in proximity (about 2 cm or less) of the tablet surface, then just that end is driven. When the writing tip end 30 is in proximity of the tablet surface it alone is driven in response to three different manners of operation to provide three different effects. Likewise, when the eraser end 28 is driven alone, it provides three different effects to three different manners of operation.

A "touch and lift" operation of the writing tip end 30 or the eraser end 28 is used for selecting a displayed item. Preferably, once the stylus end 28, 30 makes contact with the tablet surface, the "touch" part of the operation is defined but the user must lift the stylus end 28, 30 from the tablet surface within the succeeding second or so to define the "lift" portion of the operation. A "touch and move" operation enables the user to move a displayed item anywhere in view 26 of display unit 18. The operation is invoked upon the user placing a stylus end 30, 28 on the tablet surface and moving the stylus end 30, 28 while maintaining it in contact with the tablet surface for more than a preset number of pixels, for example about four pixels. The third manner of operation is writing with the writing tip end 28 of the stylus 14 to insert markings on a chosen displayed document. The third manner of operation of the eraser end 28 is erasing with the eraser end 28 to remove desired parts of markings which have been made by the writing tip end 30 within the same session of writing/erasing on a chosen displayed item.

Generally, the data processing system 20 provides two environments in which annotation and manipulation of documents is performed. One environment is best described as a computer work area called the user's system desk which contains images of all the documents in the user's possession. The second environment provides a view of a single selected document including a new document and enables annotation or creation of that document with stylus-written/erased, keyboard-typed and audio-inputted annotations. The second environment is referred to as the "annotator" and may be invoked from any view on display unit 18 at any time. In particular, the annotator may be invoked during any working program by the user placing an end of the stylus 14 in proximity of the tablet surface. This causes the processor 22 to capture the screen view currently being displayed and generate from the captured screen view an annotation-ready document.

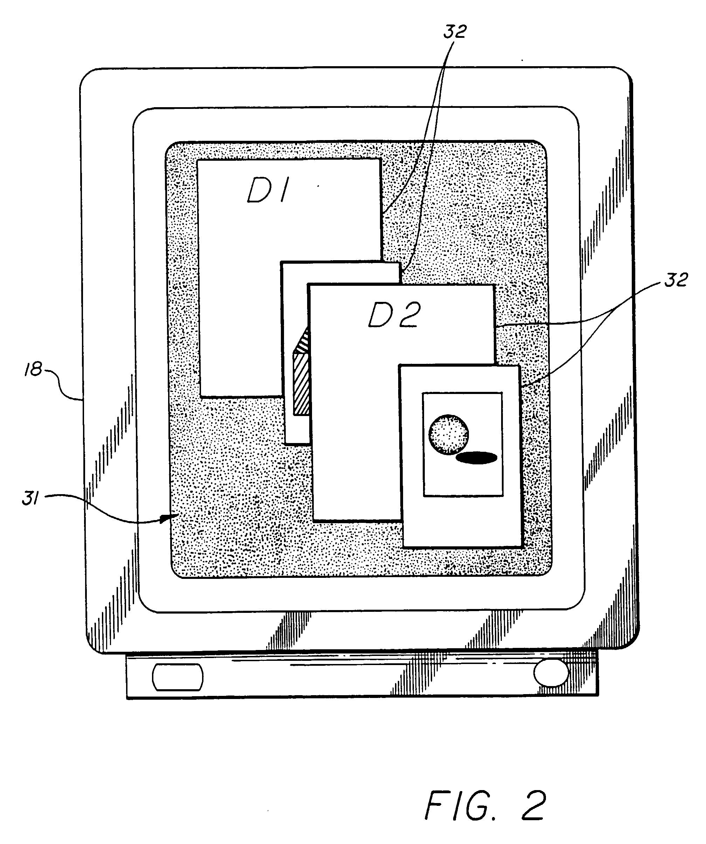

However, in the case where a multiwindow support program is running which provides various windows 32 (Figure 2) for displaying images selected from a database of images, invocation of the annotator is not immediate but through the user's system desk. During such a multiwindow support program a user is able to query the image database for desired images. In response to a query, the program performs a search in the database and provides results of the search in various windows 32 on the screen of display unit 18. Each window 32 holds an image requested by the user. In the case of more than one window 32 displayed at the same time, the program may overlap the image windows 32 as shown in Figure 2.

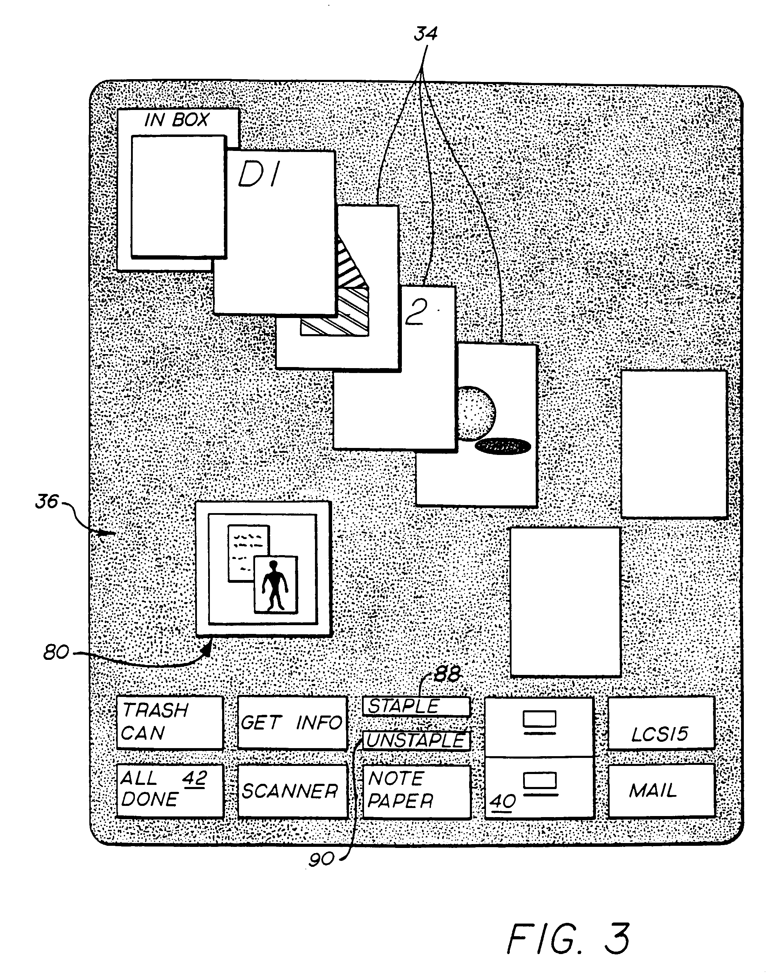

To invoke the annotator at this time, the user places the writing tip end 30 or eraser end 28 of the stylus 14 in proximity of the surface of tablet 16. The processor 22 responds to such positioning of the stylus 14 by causing each window 32 currently displayed on display unit 18 to become an annotatable document represented by an associated stamp 34 on the user's system desk 36 as shown in Figure 3.

After effectively capturing each window and the composite multiwindow screen view to establish annotatable documents in the above manner, the user's system desk 36 is displayed through display unit 18 as shown in Figure 3. Each document generated from the multiwindow screen view 31 (Figure 2) is represented by a corresponding stamp 34. Preferably, the stamps 34 are initially stacked in the In-box 38 in the display of the user's system desk 36. The user is able to remove each document stamp 34 from the In-box by the "touch and move" manner of operation of the stylus 14 on the tablet 16. Once the user has removed each stamp 34 from the In-box, the user may reposition the stamps as desired on the user's system desk 36 by multiple operation of the stylus 14 in the touch and move manner. Upon the user's selection of a stamp 34 by the user "touching and lifting" the stylus end 28, 30 on the tablet position corresponding to the desk view position of the stamp 34, the processor 22 drives display unit 18 to exhibit a full screen size view of the document represented by the selected stamp 34. And the processor 22 thus invokes the annotator for the displayed document.

Subsequent annotation and returning to the user's system desk 36 or the previously running working program is as described in the related European patent application Serial No., 89 913 139.5 (WO 90/05 333) (i.e. through a pop-up menu).

In an alternative embodiment of the present invention, a user captures image windows during the running of the multiwindow support program and invokes the annotator for those captured documents as follows. During the running of the multiwindow support program with the desired images displayed in various windows in the screen view 26, the user places one end 28 or 30 of the stylus 14 in proximity of the tablet surface. The processor 22 responds by causing the currently displayed full screen view of overlapping windows to become an annotatable document and the annotator to be invoked for that document.

The user may annotate the composite multiwindow document with the writing and eraser ends 28, 30 of the stylus 14, keyboard 12 and/or audio assembly 24 as described above. During the session of annotation, a menu offers to the user the choice to go to the desk view. Selecting this menu pick with the "touch and lift" operation of the stylus 14 changes the screen view 26 from the full screen view of the annotated composite multiwindow document to the desk view. A stamp of the annotated composite multiwindow document appears in the In-box of the desk view now displayed on display unite 18. If no annotations were made to the composite multiwindow document during the initially invoked annotation session, then no corresponding stamp of the composite multiwindow document appears in the desk view at this time.

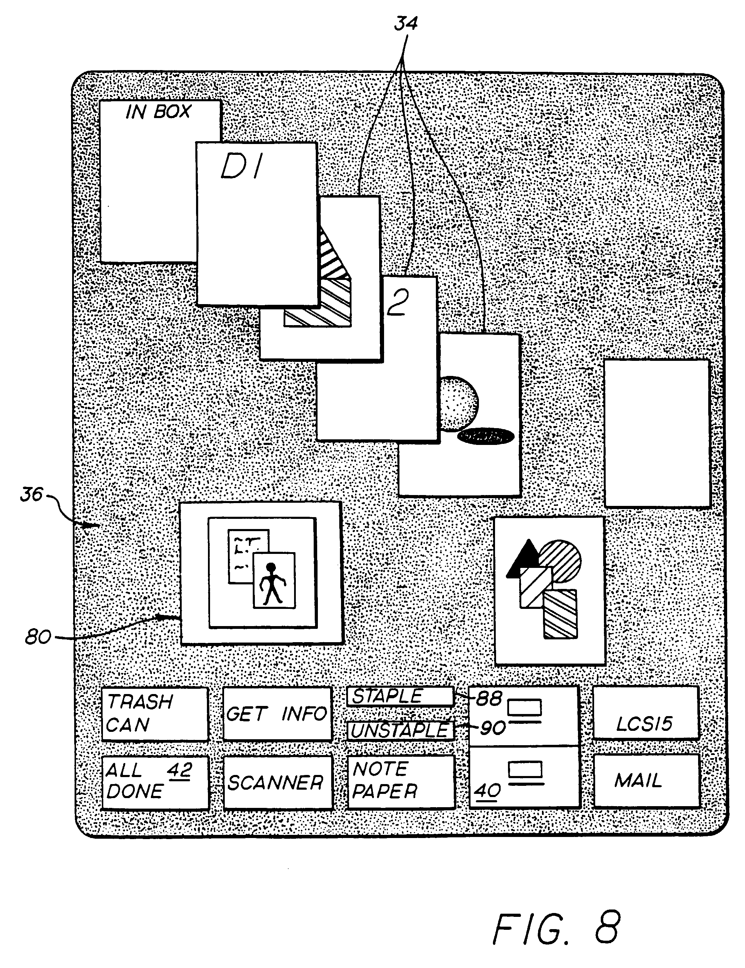

From the image capturing icon 80 (Figure 8) in the desk view, the user captures individually the image windows of the composite multiwindow screen view captured from the running of the multiwindow support program. Specifically, the user touches and lifts an end of stylus 14 on the tablet position corresponding to the screen view position of icon 80 in the desk view. Upon lifting of the stylus end, the processor 22 captures each image window independently and establishes therefrom annotatable documents. Processor 22 also configures corresponding stamps 34 for the newly obtained documents and places these stamps in the In-box on the user's system desk 36 shown in Figure 8. After stamps 34 for the image window documents appear in the In-box in the desk view, the user is able to remove each document stamp 34 from the In-box by the "touch and move" manner of operation of the stylus 14 on tablet 16 as illustrated by Figure 8. Thereafter, the user may reposition the stamps 34 by the "touch and move" operation of the stylus 14 and/or select a stamp 34 for annotation by the "touch and lift" operation of stylus 14 as previously described.

During display of the system desk 36 as shown in Figure 8, a second "touching and lifting" operation of stylus end 28, 30 on the image capturing icon 80 causes image copies of the individual image window documents which have been annotated through the annotator to be returned to the database of images of the multiwindow support program. Preferably, the returned annotated images replace the images originally (or currently) residing in the database that provided the respective image window. Such replacing is accomplished by overwriting the memory area of the respective original image with the annotated image. During a subsequent running of the multiwindow support program, the annotated image will be provided in a window instead of the original image in response to user queries for the original image.

In a specific alternative working embodiment of the present invention, the returned annotated images replace the respective unannotated screen images previously displayed by the multiwindow support program in connection with a host application. After returning to the host application, the user invokes another operation in order to permanently save the annotated images in the database of the host application for subsequent retrieval and viewing. Thus, the annotated images can be saved along with the unannotated originals or the annotated images can permanently replace the unannotated ones.

Depicted in Figure 8 is a Staple block 88 which operates like a stapler for attaching various stamps 34 to one another. As further explanation, when various stamps 34 are placed in a pile, one top of another, they can be "stapled" together to form a set by moving the Staple block 88 and placing it onto that pile. After the staple operation is performed, the Staple block 88 returns to its original resting place. An Unstaple block 90 is also provided for unstapling any set of stapled stamps. Detailed descriptions of the stapling and unstapling operations are given in a related European patent application having Serial No. 89 913 139.5 (WO 90/05 333).

In the aforementioned specific alternative working embodiment of the present invention, a stapled set of stamps 34 can be moved via the stylus to the image capturing icon 80. When the stapled set of stamps overlaps the icon 80, they are removed from the user's system desk 36 and the corresponding image documents represented by that set of stamps are returned to the multiwindow support program so that they are displayed one image document per window. Since any of the stamps on the user's system desk 36 can be stapled together, the present invention is not limited to only those stamps which were brought to the desk from the multiwindow support program by activating the image capturing icon 80. This stapling arrangement thus allows many stamps to be returned with one return operation instead of laboriously performing the same return operation one at a time for each of the many stamps desired to be sent back.

It should be understood from the above that in one embodiment of the present invention, user activation of the image capturing icon 80 by the aforementioned "touch and lift" operation of the stylus 14 results in stamps appearing in the In-box of the desk view from window images of the multiwindow support program. If annotations, using the annotator and procedure described in the related European patent application Serial No. 89 913 139.5 (WO 90/05 333), are then made to any of the documents represented by these stamps, the annotated documents may be returned to the database of images of the multiwindow support program by subsequent user activation of the image capturing icon 80. However in another alternative embodiment of the present invention, return of the annotated documents is achieved in a different manner by moving the corresponding stamp (or stapled set of stamps) onto the image capturing icon.

In addition to the various stamps 34 of documents, the user's system desk 36 (Figure 3) in any embodiment of the present invention provides indications of various depositories for documents and various operations of processor 22 that the user can elect to perform from the user's system desk. One depository as introduced above is labelled the "In-box" and is used for receiving all documents created by the user and any mail sent to the user. The other depositories and operations indicated on the user's system desk 36 and manipulation thereof are described in detail in the related European patent application Serial No. 89 913 139.5 (WO 90/05 333), with the exception of a file cabinet 40.

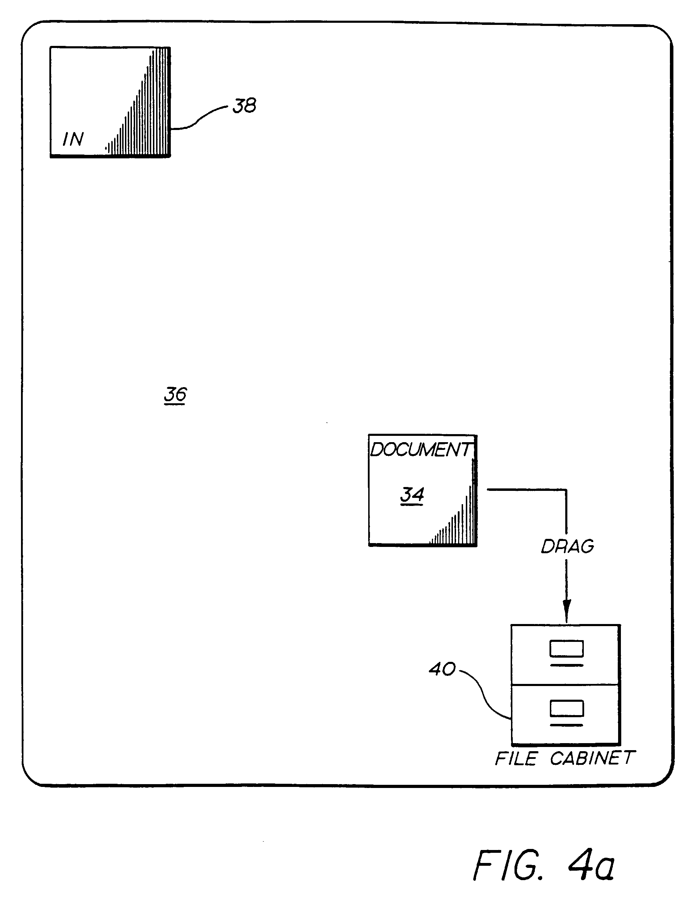

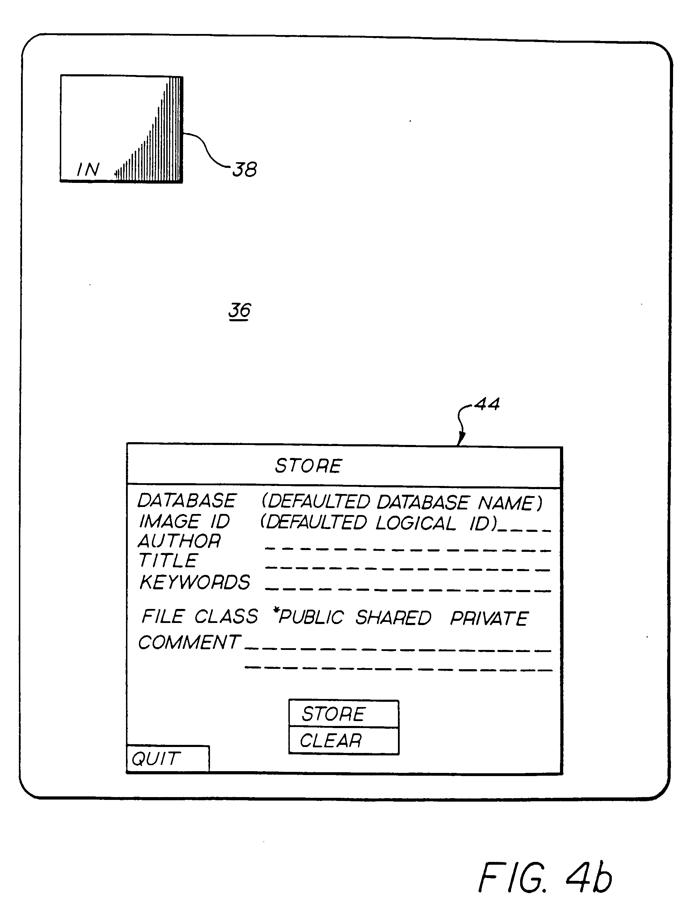

The operation of the file cabinet 40 icon is illustrated in Figures 4a-5d. The file cabinet 40 provides a user interface for exporting an annotated document from the user's system desk 36 into a desired database, for example the database of the multiwindow support program, and for importing a document from a desired database onto the the user's system desk 36. To export or file a single document from the user's system desk 36, the user places one end of the stylus on the tablet corresponding to the position of the stamp 34 of the desired document displayed in the screen view of the user's system desk 36. After positioning the stylus in such a manner, the user maintains contact of the stylus end with the tablet 16 and moves the stylus 14 across the tablet to a desired position which corresponds to the screen position of the file cabinet icon 40. During such movement, the processor displays the desired document 34 stamp being moved from an initial position to a position overlapping the file cabinet icon 40 as illustrated in Figure 4a. Upon the stamp 34 making contact with the file cabinet icon 40, the processor 22 displays a "store form" 44 in the screen view through the display unit 18 as shown in Figure 4b.

The user completes the store form 44 using the writing tip end 30 of the stylus 14 and the keyboard 12. In the field of the store form 44 labelled "database", the user types and/or writes the name of the desired database in which the document of the selected stamp 34 is to be stored, for example, the database name of the multiwindow support program. The "Image Id" field is completed by insertion of the logical identification name of the desired document. The logical identification name corresponds to a superfile identification of the desired document. The database and image id fields may be automatically completed by the processor 22 with a default database name and the logical identification name corresponding to the selected stamp 34, respectively. The user then completes the fields designated author, title and keywords by typing or writing in the respective information. The words inserted into the "key words" field are used during a subsequent search for the document in the selected database. The "File Class" field is completed by the user selecting the type of access allowed to the document, Preferable, the types of access or classes available are public, shared or private. Other user comments may be inserted in the "Comment" field.

During the completing of the store form 44, the user may erase desired stylus markings or portions thereof by operating the eraser end 28 of the stylus on the tablet 16 positions corresponding to the desired displayed areas. To clear user inserted information from all of the fields of store form 44, the user selects the area labelled "clear" in form 44, with the touch and lift manner of operation of one end of the stylus 14 on the tablet position corresponding to the position of the labelled area in the screen view 26. Upon the user lifting the stylus end, the processor 22 effectively erases all the information that the user inserted into the various fields of the store form 44. If the user decides not to store the document into the database the menu selection "quit" can be chosen by a touch and lift operation of the stylus 14 on the position of the tablet 16 which corresponds to the position of the pertinent menu selection in the screen view of Figure 4b. Selection of the "quit" menu pick returns the user to the desk view (Figure 3a) with the stamp 34 of the desired document in its initial position before being moved to file cabinet icon 40.

After completing the store form 44, user selection of the "store" menu pick causes the processor 22 to store a copy of the document represented by the selected stamp 34 in the designated database, for example the database of the multiwindow support program. The screen view of the user's system desk 36 is then redisplayed with the stamp 34 of the selected document repositioned in its initial position.

In a preferred embodiment upon selection of the "store" menu pick, the processor 22 copies the actual image data associated with the selected document stamp 34 and passes the image data and its associated parameter block to a network communication manager. The network communication manager in turn passes the image and parameter block to an application, preferrably written in either COBOL or PL/1 programming language, that stores the image data onto a magnetic or optical disk and updates two tables which support the target database (i.e. the database of the multiwindow support program). One of the tables is a locator table which provides the relationship between the physical identification on optical disk of an image to its logical identification which is supplied by the user in the "Image Id" field. The second table is the file cabinet table which relates the user designated author, keywords and logical identification to the image data for each image filed through the file cabinet icon 40. There is only one file cabinet table and it is unique to system 20 (Figure 1).

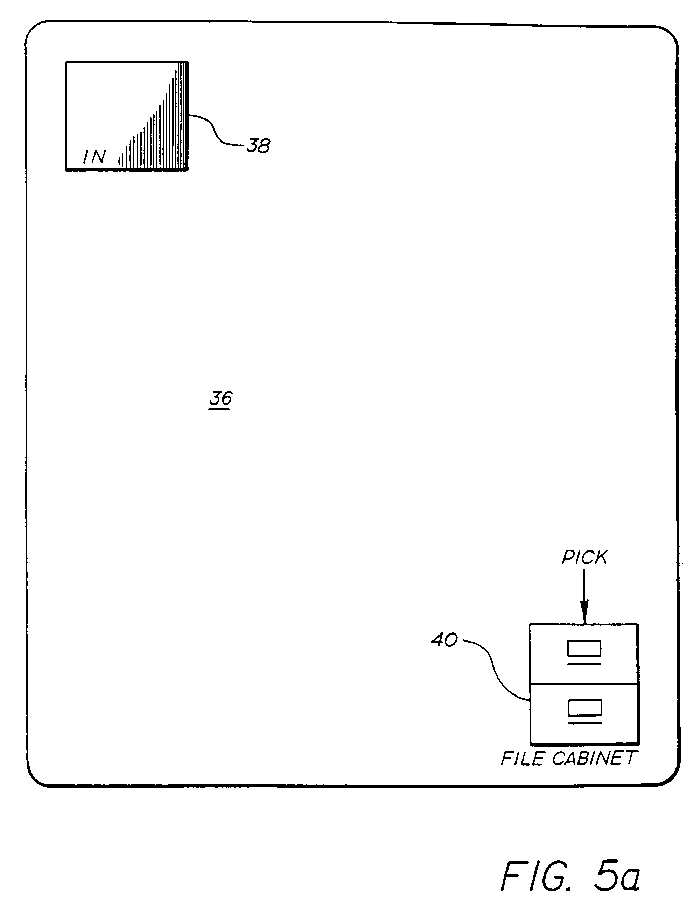

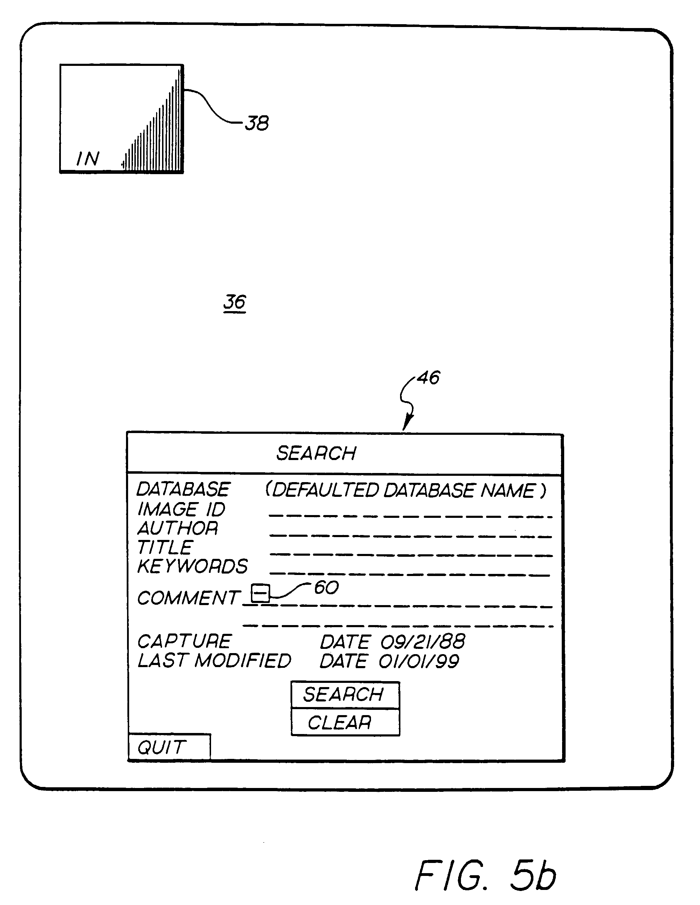

In order to retrieve an image from a database, the user selects the file cabinet icon 40 during the display of the user's system desk 36 as shown in Figure 5a. Selection of the file cabinet 40 is by the user operating an end of the stylus 14 in a touch and lift manner at the position on the tablet 16 which corresponds to the screen position of the file cabinet icon 40. Upon such touching and lifting of the stylus, the processor 22 displays a "search form" on the user's system desk 36 through the display unit 18. As shown in Figure 5b, the search form 46 has fields similar to the "store form" 44.

The "Database" field is automatically completed by the processor 22 with the name of a default database, such as the database associated with the multiwindow screen program. The user inserts the logical identification name or any portion thereof of the desired image in the "image id" field by writing with the stylus 14 or typing on the keyboard 12 with the keyboard cursor 60 positioned in the "Image Id" field. The author and title of the desired document are in a similar manner user inserted in the respective fields on the search form 46. Key words to perform the search are user selected and written/typed into the proper field. The user may also insert text in the "comment" field to provide further criteria for the search. The user provided information in the comment field is used to perform a random text search in the database designated in the "database" field.

It is understood that various symbols may be employed to semi-automate configuration of the search as is known in the art. For example, a question mark in a field may indicate to the processor to search all possible entries for that field. A semicolon between two entries in a field may indicate to search with regard to one of the entries or the other. A colon between a first entry and a second entry in a field may indicate to search all possible entries between the first entry and the second entry for that field. An ampersand between two entries in a field may indicate to search for the occurrence of both entries in that field.

If the user makes a mistake such as misspelling a word or name in the search form 46, he may use the eraser end 28 of a stylus 14 to remove the mistake written by the writing end 30 of the stylus. Otherwise, the user may select the "clear" menu pick by a touch and lift operation of the stylus 14 on the tablet 16 position corresponding to the screen position of the menu pick. In response to this menu pick, the processor 22 clears all the user inserted information from the search form 46 and provides a "clean" search form 46.

It is understood that alternative common methods of erasing typed insertions may also be used, such as the use of a "backspace" key during typing. Also the user may reposition the typing cursor 60 on the search form 46 by the touch and move operation of a stylus end on the tablet position corresponding to the cursor 60 position in the screen view.

If the user decides that a search is no longer desired, he may touch and lift an end of the stylus 14 on the tablet position corresponding to the "quit" menu selection. This causes the processor 22 to remove the "search form" 46 from the screen and display the desk view (Figure 3).

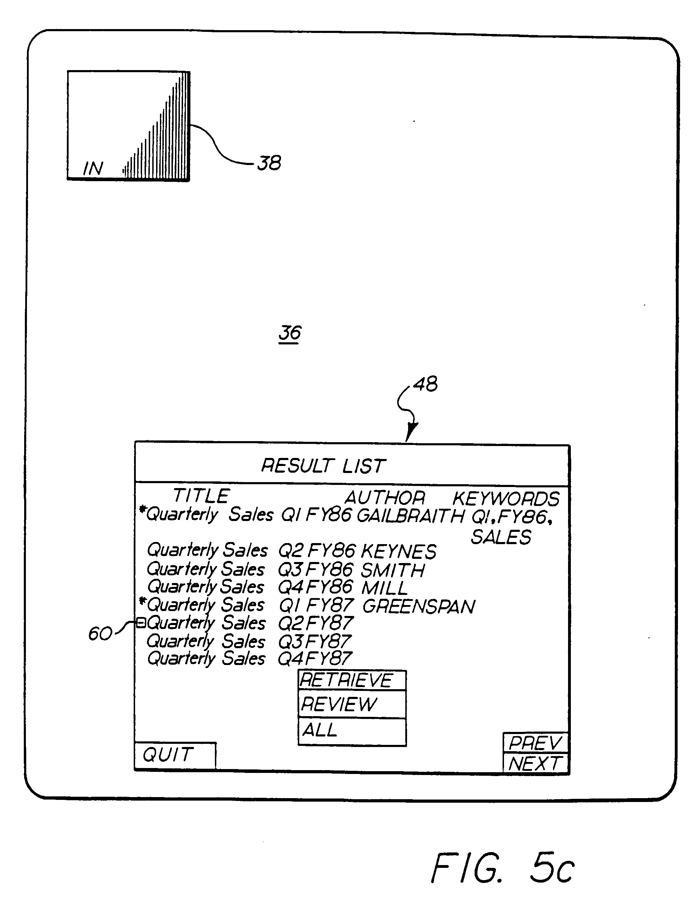

To proceed with the search after completing the search form 46, the user selects the "search" menu selection by touching and lifting an end of the stylus 14 on the corresponding tablet position. In response to selection of the "search" menu pick, the processor 22 generates a query with the user designated information on the search form 46. The query is passed to an application which processes the query on the user designated database. Preferably, the database is associated with an index, such as the file cabinet table discussed previously, which lists search information (e.g. title, key words, author) for each item stored in the database through the file cabinet. The query is processed with respect to the index which provides actual or indirect pointers to the images that satisfy the query. From the pertinent pointers, the application generates a result list which is transferred back through the communications network manager to the user's workstation 10 which displays the result list 48 on the desk view as shown in Figure 5c.

The result list 48 indicates all images in the designated database which satisfy the criteria provided by the user on the "search form" 46. The result list 48 may be more than one page long and thus may be viewed page by page with the "prev" and "next" menu picks (Figure 5c). To make a selection of either of these menu picks, the user operates the stylus 14 in the touch and lift manner on the corresponding tablet position. in order for a user to view a listed image, the user marks an asterisk or similar indicator next to the desired listed image title with the stylus writing tip end 30 or keyboard 12 and keyboard cursor 60. Alternatively, the user may select all listed images by selecting the "all" menu pick with a touching and lifting of the stylus 14 on the tablet 16 accordingly.

Thereafter, a user selection of the "retrieve" or the "review" menu selection will provide the selected images to the user in stamp or full-screen view form, respectively. Under the "review" menu selection, the processor 22 presents the selected images one by one in a full-screen view, in result list order. For each full screen view of a selected image, the user is provided with the menu selection of either "retrieve" to provide a stamp 34 of the currently displayed document in the In-box 38 on the user's system desk 36, "drop" to remove the indication of the image from the result list and present a full screen view of the next selected image, or "quit" to return to the result list screen view shown in Figure 5c.

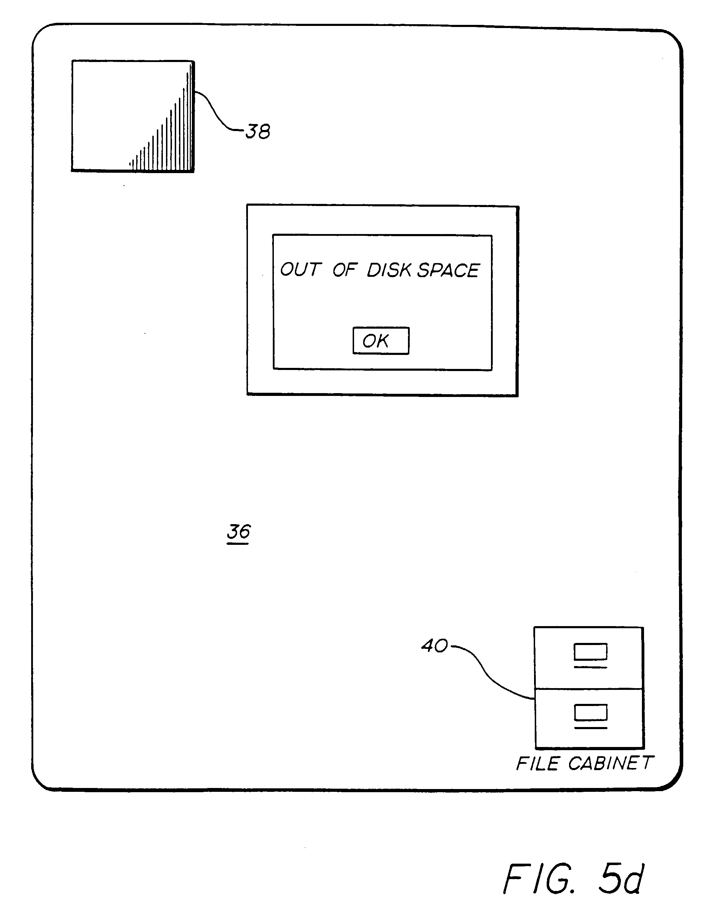

Under the "retrieve" menu selection from the result list screen view, the processor 22 provides a generation of a stamp 34 for each of the user selected images and delivers the stamps 34 to the In-box 38 on the user's system desk 36, in result list order, until no available disk space remains in system 20. If disk space becomes unavailable, an error message is provided in the desk view as shown in Figure 5d. The error message after being read may be permanently removed from the desk view by the user touching and lifting a stylus end on the "O.K." menu pick of the screen view as shown in Figure 5d.

With the exception of operating the stylus 14, the above is generally accomplished by known routines in the art for processing the search form 46 and manipulating the result list 48 according to user instruction. Each of the menu selections (i.e. "retrieve", "review", "all", "prev", "next", "quit") are supported by associated routines to accomplish the respective function (i.e. paging, marking or screen view change, etc.). After the user is finished with the search form 46 or result list 48 screen views, the processor 22 provides a display of the desk screen view with the stamps 34 and file cabinet 40 in the position in which the user last left them and with new stamps of any retrieved documents in the In-box 38. Thereafter, the user is able to move stamps 34 as desired by the touch and move operation of the stylus 14. The user may also annotate documents of stamps 34 upon selection of the stamp with the touch and lift operation of an end of the stylus.

A detailed discussion of the annotating of,documents from the desk view may be found in the related European patent application Serial No. 89 913 139.5 (WO 90/05 333), which is herein incorporated by reference.

### Multiwindow Support Program (MWSP) - System 20 Interface

In a preferred embodiment, all images of the multiwindow support program reside on an extended memory card (hererafter "Emm card"). During the running of the multiwindow support program, desired images are displayed directly onto the screen of display unit 18 from the Emm card. When the user places stylus 14 in proximity of tablet 16 to invoke the annotator of system 20, the multiwindow support program formats a parameter block on the Emm card for each image currently being displayed in a window 32 on display unit 18. Each parameter block states for the associated image the location or address of the image on the Emm card. In turn, processor 22 responds by reading the image addresses from the parameter blocks and therewith obtaining copies of the images from the Emm card. The images are thus generally initially imported to system 20 in expanded form. Thereafter processor 22 miniaturizes each image to form associated stamps 34 and formats the image to form associated stamps 34 and formats the images to form corresponding annotatable documents. Processor 22 stores the stamps of the Emm card and records the Emm card address of the stamps in the parameter block for later use by system 20. Processor 22 forms an associated stamp and corresponding document of the composite multiwindow screen view from the bit map which generates the screen view.

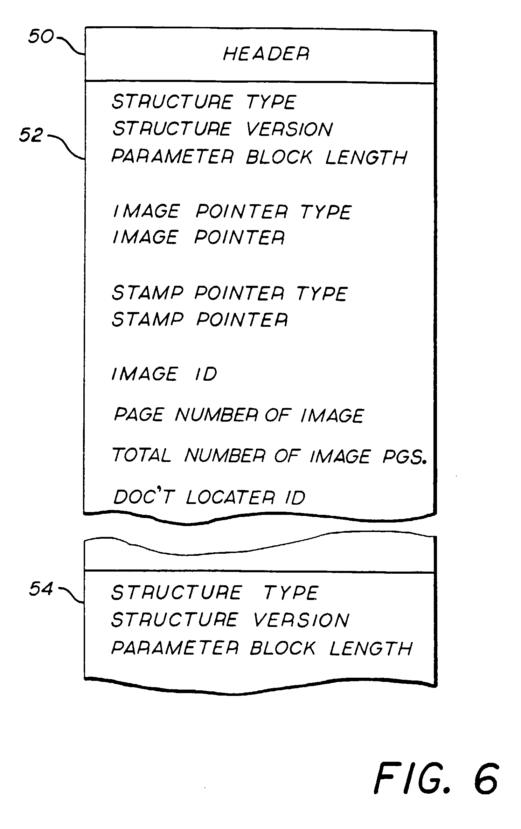

An illustration of the data structure holding parameter blocks 52, 54 of different images is provided in Figure 6. The data structure has a header unit 50 which provides indications of the type and version of the data structure. Header unit 50 also provides an indication of the total length of the structure.

Each parameter block 52, 54 of the data structure has the same format which is now described with reference to just parameter block 52. It is understood that details of parameter block 52 apply to parameter block 54 and successive parameter blocks (not shown).

In a first byte of parameter block 52 the structure type is indicated. In a second byte the structure version is stated. The following two bytes hold an indication of the total length of the parameter block.

The succeeding byte indicates the type of image pointer given for the associated image. In the preferred embodiment there are four types of image pointers as follows:
- type 0: an illegal null pointer
- type 1: a pointer to M/S DOS main memory
- type 2: a pointer to Emm card memory
- type 3: a pointer to certain option card memory
The actual image pointer is provided in the following two bytes.

A stamp pointer and type is provided in succeeding bytes. The stamp pointer type corresponds to the image pointer types.

In the next two bytes is an identification number of the image. This number is used by the multiwindow support program to reference the image during the running of that program.

An image may span across several pages or screen views. Thus the image page number currently being viewed or accessed is provided in the following two bytes. The next two bytes provides an indication of the total number of pages of the image.

The last 20 bytes of the parameter block 52 provides a document locator identification. The multiwindow support program uses this location ID for identification purposes in local routines and procedures within that program.

Processor 22 employs a character device driver called SysConfig which enables inter-program communications. SysConfig is generally of the standard MS-DOS types. For performance and memory usage reasons, programs wishing to communicate with SysConfig do not utilize the standard device driver communication channels. Instead, communication is established by a program obtaining a far vector to function dispatcher of SysConfig through a specific microprocessor interrupt. Once such a communication line is established, the program may call SysConfig directly without the additional overhead required for device driver communications.

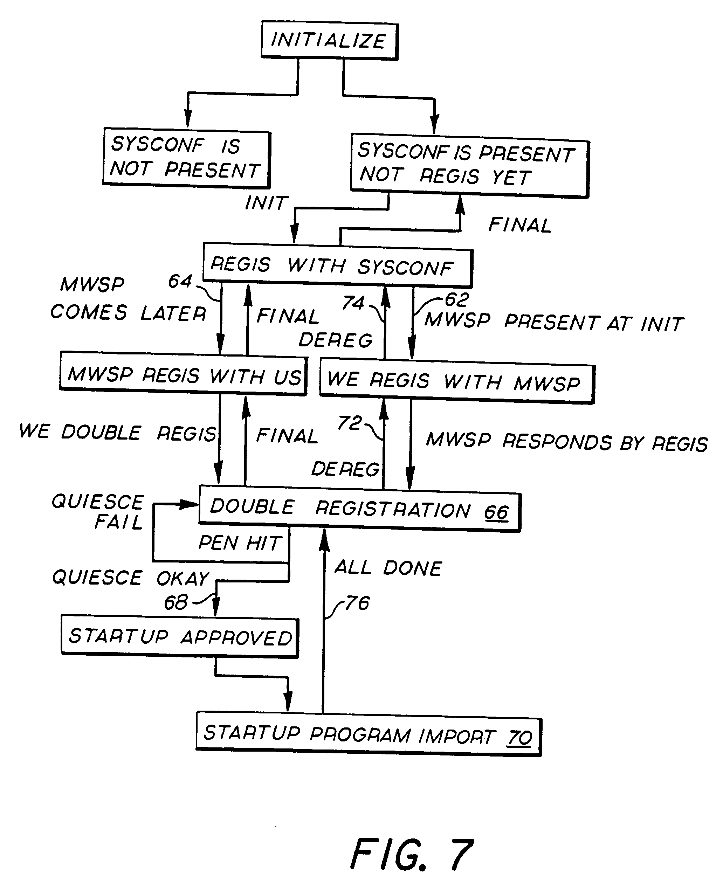

With specific reference to the multiwindow support program and the supporting program of system 20, Sysconfig (via program calls to it) enables these programs to determine which is resident. Upon initialization of system 20, as illustrated in Figure 7, the system 20 program checks if SysConfig is present and if so, registers with SysConfig the inter-process communications pointer (IPCP) of the system program. IPCP's are pointers to data or code which are posted with SysConfig for subsequent use by other programs. Global flags and pointers (such as a pointer to the entry port of the system 20 program) for SysConfig are also initialized as appropriate at this time. At 62 in Figure 7, the system 20 program then calls and asks SysConfig if the multiwindow support program is initially present, and if so, registers the IPCP of the system program with the multiwindow support program.

Otherwise at the initialization of the multiwindow support program at 64 in Figure 7, that program calls SysConfig and registers its IPCP with SysConfig. The program asks SysConfig if the system 20 program is present. If so, SysConfig provides the multiwindow support program with address and code means to call and register the IPCP of the multiwindow support program with the supporting program of system 20.

Whenever one of the programs registers its IPCP with the other program, the other program responds by registering back with its IPCP as shown at 66 in Figure 7. This double registration ensures that both programs are synchronized with each other.

Thereafter the user is able to obtain the image viewing features of the multiwindow support program. During the running of that program, a positioning of the stylus 14 in proximity of tablet 16 triggers the certain microprocessor interrupt which obtains, for the system 20 program, the far vector to the function dispatcher of SysConfig. As a result, the system 20 program is able to communicate to the multiwindow support program via SysConfig.

Within the interrupt, a routine called takeover is invoked as described in detail in related European patent application Serial No. 89 913 139.5 (WO 90/05 333). At the beginning of that routine, procedure AppSwitch is invoked and determined whether the multiwindow support program is resident by querying SysConfig for the registration of that program. If the program is registered, then AppSwitch performs a call to the entry point indicated by the IPCP provided (via SysConfig) at the time the multiwindow support program registered with SysConfig. The call to the multiwindow support program asks that program to quiesce.

With receipt of the call and request to quiesce, the multiwindow support program obtains processor control and does whatever is necessary to put itself in a temporary static state so that the system 20 program may take over processor control. This includes closing open files, terminating outstanding processing and any pertinent screen processing. The multiwindow support program also prepares the parameter blocks 52, 54 and stamps for the images shown in windows 32 on display unit 18 at the time of the interrupt.

During the time that the multiwindow support program is quiescing, AppSwitch waits in a subordinate position. Once quiescing is complete (at 68 in Figure 7), then the multiwindow support program returns control to AppSwitch which in turn continues the takeover routine with values returned in global registers from AppSwitch. One such value changes the initial application identification to procedure ImportApp. Another such value is the startup code for the application portion of the system 20 program. In another register, the value is the address of the prepared parameter blocks on the Emm card. One more register holds the IPCP index to the multiwindow support program for later use by the system 20 program.

The system 20 program continues at 70 in Figure 7 by taking over processor control, importing the pertinent images with the aid of the address and pointer information on the prepared parameter blocks, making necessary files (e.g., super files etc.) and displaying the desk view (e.g., Figure 3). Operation of the system 20 program thereafter to implement the various features of the desk view and annotator is provided in detail in the related application.

When the user exits the desk view to return to the multiwindow support program at 76 in Figure 7, the system 20 program returns control to the multiwindow support program via the IPCP held in the last mentioned register. At that time, the multiwindow support program deregisters with the system 20 program and SysConfig at 72 and 74 in Figure 7. Thereafter the multiwindow support program rebuilds the screen of display unit 18 to display the view at the time of the interrupt. This is accomplished by the multi-support program having kept the pertinent image information from the quiesce procedure.

## Claims

1. A data processing system (20) comprising a processor (22) for executing programs, an annotation input device (14) coupled to the processor (22) for executing programs, a means for annotating a displayed document and a display (18) coupled to the processor (22) for displaying screen views (31) including multiple windows,
characterized by:
(a) means for displaying at least two windows (32) on the screen to form a screen view (31);
(b) means for beginning execution of an annotation program in response to an annotation input (20);
(c) means for capturing an image of at least one window (32) being displayed as a separate annotatable image to establish an annotatable document therefrom including an image capturing icon;
(d) means for annotating the annotatable image in response to annotation inputs (14);
(e) means for storing the annotatable image with the annotations upon completion thereof;
(f) means for making a reduced image (34) of the annotatable image, the reduced image (34) containing recognizable and distinguishable details of the annotatable image, the reduced image (34) of each annotatable image thus being unique; and
(g) storing the reduced image (34).

2. The system as claimed in claim 1,
characterized in that
the annotation input device (14) includes a stylus.

3. The system as defined in claim 1,
characterized in that
the windows (32) are overlapping in the screen view (31).

4. The system as defined in claim 3,
characterized in that
the annotation program stops execution of the image managing program during display of overlapping windows.

5. The system as defined in claim 1
characterized by
means for retrievably storing in the database a working document image annotated with user desired annotations input to the means for annotating through the annotation input device.

6. A method of annotating displayed information of a data processing system (20) comprising a processor (22) running, as its primary task, a windowing program, an electronic display (18) coupled to the processor (22) displaying, in a full screen view (31), a window view and an annotation input device (14) coupled to the processor (22),
characterized by:
(a) displaying at least two windows (32) on the screen to form a screen view (31);
(b) providing an annotation input to the system (20);
(c) in response to that input beginning execution of an annotation program;
(d) capturing by use of an image capturing icon an image of at least one window (32) being displayed as a separate annotatable image to establish an annotatable document therefrom;
(e) annotating the annotatable image;
(f) upon completion of annotation, storing the annotatable image with the annotations made;
(g) making a reduced image (34) of the annotatable image, the reduced image (34) containing recognizable and distinguishable details of the annotatable image, the reduced image (34) of each annotatable image thus being unique; and
(h) storing the reduced image (34).

7. The method according to claim 6 and further including stopping the running of the windowing environment while saving the state of all programs being executed at the time of stopping in response to the input and upon completion of annotation terminating the execution of the annotation program and resuming execution of the programs which were being executed at the time of stopping in response to the input.

8. The method according to claim 7,
characterized in that
the annotation input device (14) includes a stylus.

9. The method according to claim 6 or 7,
characterized in that
the windows (32) are overlapping in the screen view (31).

10. The method according to claim 6,
characterized by
a database storing the saved window images.

11. The method according to claim 10,
characterized in that
the annotation program is capable of storing images in the database and retrieving images from the database to form images which are annotatable during running of the annotation program.

12. The method according to claim 6,
characterized in that
the annotation program generates a file cabinet icon (40), the annotation program responding to predefined stylus strokes performed with respect to the icon (40) by moving user selected images relative to the database.

## Patentansprüche

1. Datenverarbeitungssystem (20) mit einem Prozessor (22) zum Ausführen von Programmen, einem mit dem Prozessor (22) zum Ausführen von Programmen verbundenen Annotationseingabegerät (14), einer Einrichtung zum Beschriften eines angezeigten Belegs, und einem mit dem Prozessor (22) verbundenen Anzeigegerät (18) zum Anzeigen von Mehrfachfenstern aufweisenden Bildschirmdarstellungen (31),
gekennzeichnet durch
a) eine Einrichtung zum Anzeigen von wenigstens zwei Fenstern (32) auf dem Bildschirm zur Bildung einer Bildschirmdarstellung (31),
b) eine Einrichtung für das Starten der Ausführung eines Annotationsprogramms in Abhängigkeit von einer Annotationseingabe (20),
c) eine Einrichtung zum Entwerfen eines Bildes von wenigstens einem angezeigten Fenster (32) als getrenntes beschriftbares Bild, derart, daß daraus ein beschriftbarer Beleg einschließlich eines Bildentwurf-Ikons erstellbar ist,
d) eine Einrichtung zum Beschriften des beschriftbaren Bildes in Abhängigkeit von Annotationseingaben (14),
e) eine Einrichtung zum Speichern des beschriftbaren Bildes mit den Annotationen nach deren Fertigstellung,
f) eine Einrichtung zum Erzeugen eines verkleinerten Bildes (34) des beschriftbaren Bildes, wobei das verkleinerte Bild (34) erkenn- und unterscheidbare Einzelheiten des beschriftbaren Bildes enthält, das verkleinerte Bild (34) jedes beschriftbaren Bildes somit eindeutig ist, und
g) die Speicherung des verkleinerten Bildes (34).

2. System nach Anspruch 1,
dadurch gekennzeichnet, daß
das Annotationseingabegerät (14) einen Griffel umfaßt.

3. System nach Anspruch 1,
dadurch gekennzeichnet, daß
sich die Fenster (32) in der Bildschirmdarstellung (31) überlappen.

4. System nach Anspruch 3,
dadurch gekennzeichnet, daß
das Annotationsprogramm die Ausführung des Bildverwaltungsprogramms während der Anzeige der sich überlappenden Fenster stoppt.

5. System nach Anspruch 1,
gekennzeichnet durch
eine Einrichtung, mit der sich in der Datenbank ein Arbeitsbelegbild, das mit vom Benutzer gewünschten Annotationen versehen ist, welche in die Annotationseinrichtung über das Annotationseingabegerät eingegeben wurden, wiedergewinnbar speichern läßt.

6. Verfahren zum Beschriften angezeigter Informationen eines Datenverarbeitungssystems (20), das umfaßt: einen Prozessor (22), der als seine Hauptaufgabe ein Fensterdarstellungsprogramm ausführt, ein mit dem Prozessor (22) verbundenes elektronisches Anzeigegerät (18) zum Anzeigen einer Fensterdarstellung als volle Bildschirmdarstellung, und ein mit dem Prozessor 22) verbundenes Annotationseingabegerät (14),
gekennzeichnet durch:
a) das Anzeigen von wenigstens zwei Fenstern (32) auf dem Bildschirm zur Bildung einer Bildschirmdarstellung (31),
b) das Eingeben einer Annotation in das System (20),
c) das von dieser Eingabe abhängige Starten der Ausführung des Annotationsprogramms,
d) unter Benutzung eines Bildentwurf-Ikons das Entwerfen eines Bildes von wenigstens einem angezeigten Fenster (32) als getrenntes beschriftbares Bild, derart, daß daraus ein beschriftbarer Beleg erstellbar ist,
e) das Beschriften des beschriftbaren Bildes,
f) nach Beendigung der Annotation das Speichern des beschriftbaren Bildes mit den ausgeführten Annotationen,
g) das Erstellen eines verkleinerten Bildes (34) des beschriftbaren Bildes, wobei das verkleinerte Bild (34) erkenn- und unterscheidbare Einzelheiten des beschriftbaren Bildes enthält, das verkleinerte Bild (34) jedes beschriftbaren Bildes somit eindeutig ist, und
h) das Speichern des verkleinerten Bildes (34).

7. Verfahren nach Anspruch 6,
ferner mit dem Stoppen des Fensterdarstellungsprogramms bei Sicherung des Zustandes aller zum Zeitpunkt des von der Eingabe abhängigen Stopps ablaufender Programme, und nach Fertigstellung der Annotation das Beenden der Ausführung des Annotationsprogramms und das Wiederaufnehmen der Ausführung der Programme, die zum Zeitpunkt des von der Eingabe abhängigen Stopps abliefen.

8. Verfahren nach Anspruch 7,
dadurch gekennzeichnet, daß
das Annotationseingabegerät (14) einen Griffel umfaßt.

9. Verfahren nach Anspruch 6 oder 7,
dadurch gekennzeichnet, daß
sich die Fenster (32) in der Bildschirmdarstellung (31) überlappen.

10. Verfahren nach Anspruch 6,
gekennzeichnet durch
eine Datenbank, welche die gesicherten Fensterbilder speichert.

11. Verfahren nach Anspruch 10,
dadurch gekennzeichnet, daß
das Annotationsprogramm Bilder in der Datenbank zu speichern und Bilder aus der Datenbank wiederzugewinnen vermag, derart, daß Bilder entstehen, die während des Ablaufs des Annotationsprogramms beschriftbar sind.

12. Verfahren nach Anspruch 6,
dadurch gekennzeichnet, daß
das Annotationsprogramm ein Dateischrank-Ikon (40) generiert, wobei es auf im voraus definierte, in bezug auf das Ikon (40) ausgeführte Griffelstriche reagiert, indem es vom Benutzer gewünschte, sich auf die Datenbank beziehende Bilder bewegt.

## Revendications

1. Système informatique comprenant un processeur (22) pour exécuter des programmes, un dispositif d'entrée d'annotations (14) couplé au processeur (22) pour exécuter des programmes, des moyens pour annoter un document affiché et un affichage (18) couplé au processeur (22) pour afficher des vues d'écran (31) comprenant des fenêtres multiples,
caractérisé par :
(a) des moyens pour afficher au moins deux fenêtres ( 32) sur l'écran pour former une vue d'écran (31);
(b) des moyens pour commencer l'exécution d'un programme d'annotation en réponse à une entrée d'annotation (20);
(c) des moyens pour saisir une image d'au moins une fenêtre (32) affichée en tant qu'image pouvant être annotée séparée pour réaliser à partir de celle-ci un document pouvant être annoté comprenant une icône de saisie d'image;
(d) des moyens pour annoter l'image pouvant être annotée en réponse à des entrées d'annotation (14);
(e) des moyens pour stocker l'image pouvant être annotée avec les annotations lorsque celles-ci sont terminées;
(f) des moyens pour réaliser une image réduite (34) de l'image pouvant être annotée, l'image réduite (34) contenant des détails pouvant être distingués et reconnaissables de l'image pouvant être annotée, l'image réduite (34) de chaque image pouvant être annotée étant ainsi unique; et
(g) des moyens de stockage de l'image réduite (34).

2. Système selon la revendication 1,
caractérisé en ce que
le dispositif d'entrée d'annotation (14) comprend un stylet.

3. Système selon la revendication 1,
caractérisé en ce que
les fenêtres (32) se chevauchent sur la vue d'écran (31).

4. Système selon la revendication 3,
caractérisé en ce que
le programme d'annotation stoppe l'exécution du programme de gestion d'images pendant l'affichage de fenêtres se chevauchant.

5. Système selon la revendication 1,
caractérisé par
des moyens pour stocker de façon récupérable dans la base de données une image de document de travail annotée avec les annotations souhaitées par l'utilisateur fournies aux moyens pour annoter par le dispositif d'entrée d'annotation.

6. Procédé d'annotation d'une information affichée d'un système informatique (20) comprenant un processeur (22) exécutant, comme tâche principale, un programme de fenêtrage, un affichage électronique (18) couplé au processeur (22) affichant, dans une vue en pleine page (31), une vue à fenêtre et un dispositif d'entrée d'annotation (14) couplé au processeur (22),
caractérisé par :
(a) l'affichage d'au moins deux fenêtres (32) sur l'écran pour former une vue d'écran (31);
(b) la fourniture d'une entrée d'annotation au système (20);
(c) en réponse à cette entrée la mise en route de l'exécution d'un programme d'annotation;
(d) la saisie, en utilisant une icône de saisie d'image, d'une image d'au moins une fenêtre (32) affichée en tant qu'image pouvant être annotée séparée pour réaliser à partir de celle-ci un document pouvant être annoté;
(e) l'annotation de l'image pouvant être annotée;
(f) après achèvement de l'annotation, le stockage de l'image pouvant être annotée avec les annotations effectuées;
(g) la réalisation d'une image réduite (34) de l'image pouvant être annotée, l'image réduite (34) contenant des détails pouvant être distingués et reconnaissables de l'image pouvant être annotée, l'image réduite (34) de chaque image pouvant être annotée étant ainsi unique; et
(h) le stockage de l'image réduite (34).

7. Procédé selon la revendication 6 et comprenant de plus l'arrêt du déroulement de l'environnement multifenêtre tout en sauvegardant l'état de tous les programmes en cours d'exécution à l'instant de l'arrêt en réponse à l'entrée et après achèvement de l'annotation l'arrêt de l'exécution du programme d'annotation et la reprise de l'exécution des programmes qui étaient exécutés à l'instant de l'arrêt en réponse à l'entrée.

8. Procédé selon la revendication 7,
caractérisé en ce que
le dispositif d'entrée d'annotation (14) comprend un stylet.

9. Procédé selon la revendication 6 ou 7,
caractérisé en ce que
les fenêtres (32) se chevauchent sur la vue d'écran (31).

10. Procédé selon la revendication 6,
caractérisé par
une base de données stockant les images de fenêtre sauvegardées.

11. Procédé selon la revendication 10,
caractérisé en ce que
le programme d'annotation peut stocker des images dans la base de données et récupérer des images de la base de données pour former des images qui peuvent être annotées pendant l'exécution du programme d'annotation.

12. Procédé selon la revendication 6,
caractérisé en ce que
le programme d'annotation génère une icône de classeur de fichiers (40), le programme d'annotation réagissant à des mouvements prédéterminés du stylet exécutés par rapport à l'icône (40) en déplaçant les images sélectionnées par l'utilisateur par rapport à la base de données.
